# EUROPÄISCHE PATENTSCHRIFT

(11) **EP 3 259 463 B1**
(45) Veröffentlichungstag und Bekanntmachung des Hinweises auf die Patenterteilung: **12.12.2018**
(21) Anmeldenummer: 16705461.8
(22) Anmeldetag: 11.02.2016
(51) Int. Cl.: F02D 1/08, H02P 6/14, H02P 6/18, H02P 6/15, H02P 6/06, F02D 41/02

(54) **VERFAHREN ZUR REGELUNG EINER KRAFTSTOFFFÖRDERPUMPE**
METHOD FOR REGULATING A FUEL PUMP
PROCÉDÉ DE RÈGULATION D'UNE POMPE D'ESSENCE

(30) Priorität: 16.02.2015 DE 102015202777
(43) Veröffentlichungstag der Anmeldung: 27.12.2017
(73) Patentinhaber: Continental Automotive GmbH, 30165 Hannover (DE)
(72) Erfinder: GRAF, Rolf, 61479 Glashütten (DE); BLUDAU, Matthias, 64589 Stockstadt a. R. (DE)
(86) Internationale Anmeldenummer: PCT/EP2016/052920
(87) Internationale Veröffentlichungsnummer: WO 2016/131705

(56) Entgegenhaltungen:
- DE-A1- 19 933 331
- DE-A1-102012 207 744
- US-A- 4 928 043
- US-A- 5 923 134

## Beschreibung

### Technisches Gebiet

Die Erfindung betrifft ein Verfahren zum Betreiben einer Kraftstoffförderpumpe, wobei die Kraftstoffförderpumpe ein Pumpwerk und einen elektrisch kommutierten Elektromotor aufweist, wobei das Pumpwerk durch den Elektromotor antreibbar ist.

### Stand der Technik

Kraftstoffförderpumpen arbeiten oftmals nach dem Verdrängerprinzip. Das heißt durch das Rotieren eines mechanisch steifen Körpers innerhalb des Kraftstoffs wird dieser verdrängt und somit in eine Richtung gefördert. Veränderungen in dem zu fördernden Medium wirken sich direkt auf das notwendige Drehmoment zum Antrieb des Pumpwerks aus.

Moderne Kraftstoffförderpumpen werden durch elektronisch kommutierte Elektromotoren angetrieben, die bauartbedingt eine Schwankung des Abgabedrehmomentes über dem Drehwinkel besitzen. Gepaart mit den Lastschwankungen, die typischerweise in einer nach dem Verdrängerprinzip arbeitenden Kraftstoffförderpumpe auftreten, kann es zu Problemen beim Betrieb der Kraftstoffförderpumpe kommen. Wenn durch die Lastschwankungen eine Überschreitung des momentan verfügbaren Abgabedrehmomentes entsteht, kann es zu einem Synchronisationsverlust zwischen dem Rotor des Elektromotors und dem den Rotor antreibenden elektrischen Feld kommen. Dies resultiert in einem starken Drehzahlabfall und führt schließlich zu einem Stillstand der Kraftstoffförderpumpe. DE 199 33 331 A1 offenbart eine solche Kraftstoffpumpe. Des Weiteren treten in nach dem Verdrängerprinzip arbeitenden Kraftstoffförderpumpen, insbesondere sogenannten G-Rotor Pumpen, im niedrigen Drehzahlbereich noch zusätzliche Einflüsse auf, die auch zu einer Schwankung des benötigten Drehmomentes über den Umdrehungen des Pumpwerks beitragen. Im Zusammenspiel dieser periodisch mit der Drehzahl auftretenden Schwankungen und den rotorwinkelabhängigen Schwankungen des Drehmoments des Elektromotors entstehen Schwankungen im Rundlauf des Pumpwerks der Kraftstoffförderpumpe. Diese Schwankungen wirken sich sowohl über Teile einer Umdrehung als auch über mehrere Umdrehungen aus. Diese Schwankungen tragen dazu bei, dass die Voraussagen der Periodendauer der elektrischen Kommutierung, welche zur bedarfsgerechten Kommutierung benötigt sind, ungenauer werden. Das Auftreten einer Schwankung beeinträchtigt somit die Genauigkeit der folgenden elektrischen Kommutierungen. Dies kann insbesondere bei niedrigen Drehzahlen und bestimmten Druckzuständen am Pumpwerk zu einem Kontrollverlust der Elektronik über die Kraftstoffförderpumpe führen.

Diese mangelnde Kontrolle ist besonders nachteilig, da ein Betrieb der Kraftstoffförderpumpe in diesen kritischen Drehzahlbereichen nicht stabil gewährleistet werden kann, und somit nicht das volle technisch mögliche Betriebsspektrum von den Kraftstoffförderpumpen ausgenutzt werden kann.

### Darstellung der Erfindung, Aufgabe, Lösung, Vorteile

Daher ist es die Aufgabe der vorliegenden Erfindung ein Verfahren zu schaffen, welches eine genaue Überwachung der Schwankungen des Rundlaufs des Pumpwerks zulässt und weiterhin derart ausgelegt ist, dass Gegenmaßnahmen gegen die Entstehung beziehungsweise die Verstärkung der Schwankungen getroffen werden können.

Die Aufgabe hinsichtlich des Verfahrens wird durch ein Verfahrens mit den Merkmalen von Anspruch 1 gelöst.

Ein Ausführungsbeispiel der Erfindung betrifft ein Verfahren zum Betreiben einer Kraftstoffförderpumpe, wobei die Kraftstoffförderpumpe ein Pumpwerk und einen elektrisch kommutierten Elektromotor aufweist, wobei das Pumpwerk durch den Elektromotor antreibbar ist, wobei die Schwankung des Rundlaufs des Pumpwerks über der Drehzahl erfasst wird, der Wert der Schwankung normiert wird und bei einer Überschreitung einer vorgebbaren Grenze durch den normierten Wert der Gradient der Drehzahländerung des Pumpwerks begrenzt wird.

Kraftstoffförderpumpen arbeiten oftmals nach dem Verdrängerprinzip oder nach dem Strömungsprinzip. Das erfindungsgemäße Verfahren ist auf Kraftstoffförderpumpen beider Arbeitsprinzipien anwendbar. Im Folgenden wird im Wesentlichen auf Kraftstoffförderpumpen, die nach dem Verdrängerprinzip arbeiten, eingegangen. Es wird dadurch eine Anwendung für Kraftstoffförderpumpen nach dem Strömungsprinzip explizit nicht ausgeschlossen.

Zu Kraftstoffförderpumpen, die nach dem Verdrängerprinzip arbeiten, gehören insbesondere sogenannte G-Rotor Pumpen, Schraubenpumpen und Rollenzellenpumpen. Diese zeichnen sich durch eine hohe hydraulisch-mechanische Steifheit aus, was dazu führt, dass eine Änderung der Viskosität oder des Drucks des zu fördernden Mediums eine direkte Auswirkung auf das zum Antrieb des Pumpwerks benötigte Drehmoment hat. Die Entstehung von Schwankungen im Rundlauf ist daher bauartbedingt begünstigt.

In Verbindung mit dem schwankenden Abgabedrehmoment der elektrisch kommutierten Elektromotoren, welches bauartbedingt ist, kann so eine Schwankung im Rundlauf des Pumpwerks entstehen. Die Schwankung entspricht dabei der Abweichung zwischen dem idealen Rundlauf des Pumpwerks ohne Schwankungen und dem tatsächlichen Ist-Rundlauf.

Besonders vorteilhaft wird diese Schwankung normiert, um eine vergleichbare Größe zu erhalten, die auf einfache Weise verarbeitet werden kann und als Grundlage für entsprechende Gegenstrategien herangezogen werden kann.

Die Kraftstoffförderpumpe weist regelmäßig ein Steuergerät auf, welches die Ansteuerung der Kraftstoffförderpumpe übernimmt. Dieses Steuergerät kann als dediziertes Pumpensteuergerät ausgeführt sein oder in einem anderen Steuergerät des Kraftfahrzeugs integriert sein. Auch ist eine Vernetzung von verteilten Einzelkomponenten vorstellbar. Das Steuergerät weist bevorzugt auch eine Funktonalität zur Erfassung der Schwankung des Rundlaufs auf. Auch ist das Steuergerät vorteilhafterweise dazu ausgelegt, eine Mehrzahl von erfassten Werten abzuspeichern, diese zu verarbeiten und einen Vergleich zwischen mehreren Werten durchzuführen. Auch ist es vorteilhaft, wenn das Steuergerät dazu ausgebildet ist eine Normierung der erfassten Schwankung des Rundlaufs durchzuführen.

Besonders vorteilhaft ist es, wenn zur Erfassung der Schwankung des Rundlaufs des Pumpwerks die Periodendauer der elektrischen Kommutierung des Elektromotors fortlaufend erfasst wird, wobei die erfassten Periodendauern der elektrischen Kommutierung mit Periodendauern von vorausgegangenen elektrischen Kommutierungen verglichen werden, wobei die Abweichung den Wert für die Schwankung des Rundlaufs des Pumpwerks bildet.

Die Schwankung des Rundlaufs des Pumpwerks kann beispielsweise durch eine kontinuierliche Positionsüberwachung des Pumpwerks oder des Rotors des Elektromotors erfasst werden. Auch sind andere Sensoriken vorstellbar, die die Bewegung des Rotors oder des Pumpwerks erfassen. Da diese Sensoriken jedoch aufwändig und teuer sind ist es besonders vorteilhaft, wenn die Schwankung indirekt über eine leicht erfassbare Messgröße erfasst wird, die idealerweise ohnehin erfasst wird. Es ist damit möglich die Schwankung genau zu bestimmen und zu überwachen, ohne dass dafür Mehrkosten für zusätzliche Elemente verursacht werden.

Ein besonders vorteilhaftes Maß ist der sogenannte "Jitter", der die Abweichung einer bei konstanter Drehzahl erfassten Periodendauer für eine elektrische Kommutierung des Elektromotors mit einer oder mehreren bei gleicher Drehzahl erfassten vorausgegangenen Kommutierungen darstellt. Der Jitter liefert ein gutes Maß für die aktuell auftretende Abweichung. Der Wert für den Jitter kann vorteilhafterweise ebenfalls normiert werden, um eine Vergleichbarkeit zu gewährleisten. Ein normierter Wert ist außerdem einfacher zu verarbeiten. Insbesondere ist die Antwortstrategie auf einen normierten Wert einfacher festzulegen, da dieser unabhängig von Einheiten ist.

Auch ist es vorteilhaft, wenn eine erfasste Periodendauer der elektrischen Kommutierung mit einem aus einer Mehrzahl von vorangegangenen Periodendauern der elektrischen Kommutierung erzeugten Mittelwert verglichen wird, wobei die Abweichung erfasst wird.

Durch das Vergleichen einer aktuell erfassten Periodendauer mit einem über mehrere Perioden gemittelten Wert ist eine höhere Sicherheit des Ergebnisses gegen spontane und zufällige Fehler erreichbar.

Ein bevorzugtes Ausführungsbeispiel ist dadurch gekennzeichnet, dass der Vergleich der erfassten Periodendauer der elektrischen Kommutierung mit den Periodendauern von vorausgegangenen elektrischen Kommutierungen bei einer konstanten Drehzahl stattfindet.

Durch das Heranziehen von Periodendauern bei einer konstanten Drehzahl ist eine Vergleichbarkeit der Werte gewährleistet. Durch eine Veränderung der Drehzahl, wobei mit der Drehzahl insbesondere die Drehzahl des Pumpwerks gemeint ist, wird automatisch auch die Periodendauer der Kommutierung verändert, wodurch eine Vergleichbarkeit nicht mehr gegeben ist. Der Vergleich kann entweder fortlaufend ständig stattfinden oder nur dann, wenn eine Drehzahl in einem kritischen Bereich anliegt. Zu den kritischen Bereichen zählen insbesondere die niedrigeren Drehzahlbereiche. Der Jitter steigt bei einer kritischen konstanten Drehzahl mit steigendem Druck in dem zu fördernden Medium. Alternativ steigt der Jitter bei konstantem Druck und fallender Drehzahl im Bereich von kritischen Drehzahlen.

Jede Kraftstoffförderpumpe hat einen spezifischen Wert für den Jitter ab dessen Überschreitung mit einem sofortigen Stillstand des Pumpwerks aufgrund von einem Synchronisationsverlust zwischen dem elektrischen Feld des Elektromotors und dem Rotor zu rechnen ist. Der Unterschied zwischen einem kritischen Bereich, in welchem der Jitter solche Ausmaße annehmen kann, und einem nicht kritischen Bereich ist oftmals sehr gering, so dass eine sehr genaue Überwachung des Jitters besonders vorteilhaft ist.

Auch ist es zu bevorzugen, wenn die Erfassung der Schwankung des Rundlaufs und die Normierung des Wertes permanent fortlaufend stattfinden. Dies ist besonders vorteilhaft, um besonders schnell reagieren zu können und eine möglichst nah an der Echtzeit liegende Information über das Auftreten und die Stärke von den Schwankungen des Rundlaufs zu haben.

Darüber hinaus ist es vorteilhaft, die Begrenzung des Gradienten variabel ist, wobei der Grenzwert für den Gradienten abhängig von der Größe des erfassten und normierten Wertes ist.

Eine variable Begrenzung des Gradienten der Drehzahländerung ist vorteilhaft, um abhängig von den spezifischen Umgebungsbedingungen, die starken Einfluss auf das Verhalten des Pumpwerks haben, und den jeweiligen Lastzuständen eine angemessene und bedarfsgerechte Begrenzung vorzunehmen. Durch eine Begrenzung des Gradienten wird insbesondere die Geschwindigkeit, mit welcher eine Anpassung der Drehzahl des Pumpwerks vorgenommen werden kann, beeinflusst. Dies reduziert die mögliche Dynamik des Systems, weswegen dies nur in definierten Grenzen geschehen sollte. Ein hoher Jitter entspricht einer höheren Schwankung und verlangt somit nach einer stärkeren Eingrenzung, um zuverlässig das Auftreten eines Stillstandes der Kraftstoffförderpumpe zu verhindern. Einem niedrigeren normierten Jitter-Wert kann dagegen mit einer geringeren Begrenzung des Gradienten begegnet werden, ohne einen Stillstand der Kraftstoffförderpumpe zu riskieren.

Weiterhin ist es vorteilhaft, wenn die Begrenzung des Gradienten der Drehzahländerung in Abhängigkeit von der Drehzahl des Pumpwerks erfolgt. Dies ist vorteilhaft, da jeder Drehzahlbereich eine unterschiedlich starke Neigung zum Entstehen eines Jitters aufweist. Dementsprechend kann die Stärke der Begrenzung des Gradienten in unterschiedlichen Drehzahlbereichen unterschiedlich ausfallen.

Auch ist es zweckmäßig, wenn der normierte Wert für die Schwankung des Rundlaufs und/oder die Drehzahl des Pumpwerks an eine externe Instanz weitergegeben wird. Insbesondere ist die externe Instanz durch das Motorsteuergerät gebildet. Aus dem Motorsteuergerät kann unter Einbeziehung der restlichen Zustandsgrößen des Verbrennungsmotors eine geeignete Antwort auf das Entstehen von ungewollten Schwankungen des Rundlaufs des Pumpwerks gegeben werden. Aufgrund der Begrenzung des Gradienten der Drehzahländerung wird eine Bedämpfung des Systems erreicht. Die Bedämpfung wirkt wie eine zeitweilige Erhöhung der Trägheit des Systems beziehungsweise der Kraftstoffförderpumpe, wodurch die Zeit, die vergehen kann bis eine geeignete Antwort als Reaktion auf den erfassten Jitter am Elektromotor ankommt, verlängert werden kann. Dies ist vorteilhaft, da dadurch auch die teilweise nur eine langsame Datenübermittlungsrate bietende Fahrzeugkommunikation schnell genug ist, um eine geeignete Antwort an den Elektromotor der Kraftstoffförderpumpe zu senden, bevor es zu einem Stillstand des Pumpwerks kommt.

Darüber hinaus ist es vorteilhaft, wenn der Unterschied zwischen der durch die elektrische Kommutierung vorgegebenen Solldrehzahl und der tatsächlichen Drehzahl des Pumpwerks erfasst wird, wobei bei der Überschreitung einer vorgebbaren Grenze eine Meldung an eine externe Instanz erfolgt.

Aufgrund der Schwankungen im Rundlauf, welche wie bereits beschrieben sowohl bauartbedingt als auch aufgrund von äußeren Einflüssen auftreten, kann die tatsächlich gewünschte Solldrehzahl, welche dem Elektromotor vorgegeben wird, von der Istdrehzahl des Pumpwerks abweichen. Die Abweichung kann hier auch minimal sein und umfasst regelmäßig einen Wert kleiner einer Umdrehung. Eine Abweichung kann zu einer negativen Beeinflussung des Systems führen. Durch eine rechtzeitige Meldung von Drehzahlabweichungen können rechtzeitige Gegenmaßnahmen ausgelöst werden.

Weiterhin ist es zweckmäßig, wenn in vorgebbaren zeitlichen Abständen eine automatische Systemprüfung ausgelöst wird, wobei hierzu die Drehzahl des Pumpwerks auf ein oder mehrere vom aktuellen Istzustand abweichende Niveaus variiert wird, wobei jeweils die Schwankung des Rundlaufs des Pumpwerks erfasst wird und der Wert der Schwankung normiert wird.

Eine solche Systemprüfung ist vorteilhaft, um die Einflüsse auf das Kraftstofffördersystem zu erfassen und durch geeignete Regelungsstrategien diesen zu begegnen. Hierbei ist der mechanische Zustand der Kraftstoffförderpumpe, der beispielsweise durch den Einlaufzustand oder die Abnutzung bestimmt wird, ebenso relevant wie die aus dem Kraftstoff resultierenden Faktoren, wie beispielsweise die Schmierfähigkeit, die Viskosität oder die Temperatur. Diese Faktoren sind regelmäßig nicht leicht zu erfassen und insbesondere das Zusammenspiel der Faktoren kann zu Auswirkungen auf das Kraftstofffördersystem führen, die den Betrieb negativ beeinflussen.

Durch das Anfahren mehrere Betriebszustände und die Erfassung der Schwankung des Rundlaufs des Pumpwerks kann ermittelt werden, ob sich eine Veränderung hinsichtlich des entstehenden Jitters gegenüber früheren Zeitpunkten gibt. Diese Veränderungen können ein Indiz für eine Veränderung des Kraftstofffördersystems sein. Über das Ablegen in einem Fehlerspeicher sowie das Abgleichen mit vorgebbaren Kennwerten kann so der Zustand des Kraftstofffördersystems jederzeit überprüft werden und somit das Ausfallrisiko minimiert werden.

Außerdem ist es zu bevorzugen, wenn das Lastdrehmoment über der Drehung des Pumpwerks erfasst wird und die Schwankung des Abgabedrehmoments des Elektromotors erfasst wird, wobei aus der Überlagerung der Schwankungen der Momente die Schwankung des Rundlaufs des Pumpwerks über der Drehzahl ermittelt wird. Diese Methode ist besonders vorteilhaft, um durch reine Messung der Drehmomentschwankungen auf die Schwankung des Rundlaufs zu schließen.

Darüber hinaus ist es vorteilhaft, wenn bei einer Änderung des Vorgabewertes der Drehzahl des Pumpwerks eine von der erfassten und normierten Schwankung des Rundlaufs abhängige Begrenzung des maximal zulässigen Gradienten der Drehzahländerung vorgegeben wird. Sobald die Ansteuerung der Kraftstoffförderpumpe geändert wird, weil beispielsweise ein neuer Betriebszustand abgedeckt werden soll, kann es zu einer Erhöhung beziehungsweise allgemein zu einer Veränderung des Jitters kommen. Daher ist es vorteilhaft, wenn bei einer Veränderung der Drehzahlvorgabe eine Begrenzung des Gradienten der Drehzahländerung vorgenommen wird, um das Entstehen oder das Vergrößern eines Jitters infolge von zu schnellen Drehzahländerungen zu vermeiden.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig. 1: ein Flussdiagramm zur Verdeutlichung des erfindungsgemäßen Verfahrens und
- Fig. 2: ein Flussdiagramm zur Verdeutlichung einer alternativen Ausgestaltung des erfindungsgemäßen Verfahrens.

### Bevorzugte Ausführung der Erfindung

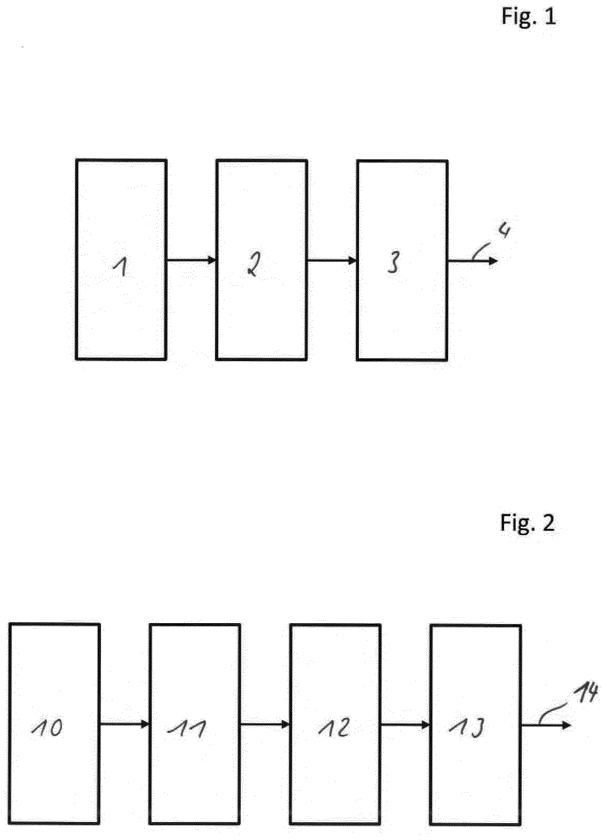

Die Figur 1 zeigt ein Flussdiagramm zur Verdeutlichung des erfindungsgemäßen Verfahrens. In Block 1 findet eine Erfassung der Schwankung des Rundlaufs des Pumpwerks statt. Dies kann beispielsweise durch die Verwendung von Positionssensoren geschehen. In Block 2 wird der in Block 1 erfasste Wert normiert, um eine einheitenlose Größe zu erhalten, die eine Aussage über das Ausmaß der Schwankungen zulässt. In Block 3 wird schließlich überprüft, ob der erfasste und normierte Wert über einem Grenzwert liegt. Sollte dies der Fall sein wird entlang des Pfeils 4 ein Signal ausgegeben, das zu einer Begrenzung des Gradienten der Drehzahländerung des Pumpwerks führt.

Die Figur 2 zeigt ein Flussdiagramm für ein alternativ ausgestaltetes Verfahren. Hier wird in Block 10 die Periodendauer einer elektrischen Kommutierung des Elektromotors erfasst. Diese ist direkt abhängig von der Drehzahl.

In Block 11 wird die erfasste Periodendauer mit einer Periodendauer oder mit einer Mehrzahl von Periodendauern von vorausgegangen elektrischen Kommutierungen verglichen. Hierzu kann beispielsweis auch ein Mittelwert aus den vorangegangenen Perioden gebildet werden.

Der Vergleichswert wird in Block 12 normiert. In Block 13 wird der normierte Wert mit einem vorgebbaren Grenzwert verglichen und schließlich wird entlang des Pfeils 14 ein Signal zur Begrenzung des Gradienten der Drehzahländerung ausgegeben, sofern der Grenzwert überschritten wurde.

Die Ausführungsbeispiele der Figuren 1 und 2 weisen insbesondere keinen beschränkenden Charakter auf und dienen der Verdeutlichung des Erfindungsgedankens.

## Patentansprüche

1. Verfahren zum Betreiben einer Kraftstoffförderpumpe, wobei die Kraftstoffförderpumpe ein Pumpwerk und einen elektrisch kommutierten Elektromotor aufweist, wobei das Pumpwerk durch den Elektromotor antreibbar ist, **dadurch gekennzeichnet, dass** die Schwankung des Rundlaufs des Pumpwerks über der Drehzahl erfasst wird, der Wert der Schwankung normiert wird und bei einer Überschreitung einer vorgebbaren Grenze durch den normierten Wert der Gradient der Drehzahländerung des Pumpwerks begrenzt wird.

2. Verfahren nach Anspruch 1, **dadurch gekennzeichnet, dass** zur Erfassung der Schwankung des Rundlaufs des Pumpwerks die Periodendauer der elektrischen Kommutierung des Elektromotors fortlaufend erfasst wird, wobei die erfassten Periodendauern der elektrischen Kommutierung mit Periodendauern von vorausgegangenen elektrischen Kommutierungen verglichen werden, wobei die Abweichung den Wert für die Schwankung des Rundlaufs des Pumpwerks bildet.

3. Verfahren nach einem der vorhergehenden Ansprüche, **dadurch gekennzeichne**t, dass eine erfasste Periodendauer der elektrischen Kommutierung mit einem aus einer Mehrzahl von vergangenen Periodendauern der elektrischen Kommutierung erzeugten Mittelwert verglichen wird, wobei die Abweichung erfasst wird.

4. Verfahren nach einem der vorhergehenden Ansprüche, **dadurch gekennzeichnet, dass** der Vergleich der erfassten Periodendauer der elektrischen Kommutierung mit den Periodendauern von vorausgegangenen elektrischen Kommutierungen bei einer konstanten Drehzahl stattfindet.

5. Verfahren nach einem der vorhergehenden Ansprüche, **dadurch gekennzeichnet, dass** die Erfassung der Schwankung des Rundlaufs und die Normierung des Wertes permanent fortlaufend stattfinden.

6. Verfahren nach einem der vorhergehenden Ansprüche, **dadurch gekennzeichnet, dass** die Begrenzung des Gradienten variabel ist, wobei der Grenzwert für den Gradienten abhängig von der Größe des erfassten und normierten Wertes ist.

7. Verfahren nach einem der vorhergehenden Ansprüche, **dadurch gekennzeichnet, dass** die Begrenzung des Gradienten der Drehzahländerung in Abhängigkeit von der Drehzahl des Pumpwerks erfolgt.

8. Verfahren nach einem der vorhergehenden Ansprüche, **dadurch gekennzeichnet, dass** der normierte Wert für die Schwankung des Rundlaufs und/oder die Drehzahl des Pumpwerks an eine externe Instanz weitergegeben wird.

9. Verfahren nach einem der vorhergehenden Ansprüche, **dadurch gekennzeichne**t, dass der Unterschied zwischen der durch die elektrische Kommutierung vorgegebenen Solldrehzahl und der tatsächlichen Drehzahl des Pumpwerks erfasst wird, wobei bei der Überschreitung einer vorgebbaren Grenze eine Meldung an eine externe Instanz erfolgt.

10. Verfahren nach einem der vorhergehenden Ansprüche, **dadurch gekennzeichnet, dass** in vorgebbaren zeitlichen Abständen eine automatische Systemprüfung ausgelöst wird, wobei hierzu die Drehzahl des Pumpwerks auf ein oder mehrere vom aktuellen Istzustand abweichende Niveaus variiert wird, wobei jeweils die Schwankung des Rundlaufs des Pumpwerks erfasst wird und der Wert der Schwankung normiert wird.

11. Verfahren nach einem der vorhergehenden Ansprüche, **dadurch gekennzeichnet, dass** das Lastdrehmoment über der Drehung des Pumpwerks erfasst wird und die Schwankung des Abgabedrehmoments des Elektromotors erfasst wird, wobei aus der Überlagerung der Schwankungen der Momente die Schwankung des Rundlaufs des Pumpwerks über der Drehzahl ermittelt wird.

12. Verfahren nach einem der vorhergehenden Ansprüche, **dadurch gekennzeichnet, dass** bei einer Änderung des Vorgabewertes der Drehzahl des Pumpwerks eine von der erfassten und normierten Schwankung des Rundlaufs abhängige Begrenzung des maximal zulässigen Gradienten der Drehzahländerung vorgegeben wird.

## Claims

1. Method for operating a fuel feed pump, wherein the fuel feed pump has a pump system and an electrically commutated electric motor, wherein the pump system can be driven by the electric motor, **characterized in that** the fluctuation in the circular motion of the pump system is detected over the rotational speed, the value of the fluctuation is standardized, and when a predefinable limit is exceeded by the standardized value the gradient of the change in the rotational speed of the pump system is limited.

2. Method according to Claim 1, **characterized in that** in order to detect the fluctuation in the circular motion of the pump system the period length of the electrical commutation of the electric motor is continuously detected, wherein the detected period lengths of the electrical commutation are compared with period lengths of preceding electrical commutations, wherein the difference forms the value for the fluctuation in the circular motion of the pump system.

3. Method according to one of the preceding claims, **characterized in that** a detected period length of the electrical commutation is compared with a mean value generated from a multiplicity of preceding period lengths of the electrical commutation, wherein the difference is detected.

4. Method according to one of the preceding claims, **characterized in that** the comparison of the detected period length of the electrical commutation with the period lengths of preceding electrical commutations takes place at a constant rotational speed.

5. Method according to one of the preceding claims, **characterized in that** the detection of the fluctuation in the circular motion and the standardization of the value take place on a constant and continuous basis.

6. Method according to one of the preceding claims, **characterized in that** the limitation of the gradient is variable, wherein the limiting value for the gradient is dependent on the magnitude of the detected and standardized value.

7. Method according to one of the preceding claims, **characterized in that** the gradient of the change in rotational speed is limited as a function of the rotational speed of the pump system.

8. Method according to one of the preceding claims, **characterized in that** the standardized value of the fluctuation in the circular motion and/or the rotational speed of the pump system is passed onto an external entity.

9. Method according to one of the preceding claims, **characterized in that** the difference between the setpoint rotational speed predefined by the electrical commutation and the actual rotational speed of the pump system is detected, wherein when a predefinable limit is exceeded a message is issued to an external entity.

10. Method according to one of the preceding claims, **characterized in that** an automatic system check is triggered at predefinable time intervals, wherein for this purpose the rotational speed of the pump system is varied to one or more levels which differ from the current actual state, wherein in each case the fluctuation in the circular motion of the pump system is detected, and the value of the fluctuation is standardized.

11. Method according to one of the preceding claims, **characterized in that** the load torque is detected over the rotation of the pump system, and the fluctuation in the output torque of the electric motor is detected, wherein fluctuation in the circular motion of the pump system is determined over the rotational speed from the superimposition of the fluctuations of the torques.

12. Method according to one of the preceding claims, **characterized in that** when there is a change in the predefined value of the rotational speed of the pump system a limitation, dependent on the detected and standardized fluctuation in the circular motion, of the maximum permissible gradient of the change in the rotational speed is predefined.

## Revendications

1. Procédé pour faire fonctionner une pompe de transport de carburant, la pompe de transport de carburant possédant un mécanisme de pompage et un moteur électrique à commutation électrique, le mécanisme de pompage pouvant être entraîné par le moteur électrique, **caractérisé en ce que** la fluctuation de la concentricité du mécanisme de pompage en fonction de la vitesse de rotation est détectée, la valeur de la fluctuation est normalisée et, dans le cas où la valeur normalisée dépasse une limite prédéfinie, le gradient de variation de la vitesse de rotation du mécanisme de pompage est limité.

2. Procédé selon la revendication 1, **caractérisé en ce que** la durée de la période de la commutation électrique du moteur électrique est détectée continuellement en vue de détecter la fluctuation de la concentricité du mécanisme de pompage, les durées de période détectées de la commutation électrique étant comparées aux durées de période de commutations électriques précédentes, l'écart formant la valeur pour la fluctuation de la concentricité du mécanisme de pompage.

3. Procédé selon l'une des revendications précédentes, **caractérisé en ce qu'**une durée de période détectée de la commutation électrique est comparée à une valeur moyenne produite à partie d'une pluralité de durées de période passées de la commutation électrique, l'écart étant détecté.

4. Procédé selon l'une des revendications précédentes, **caractérisé en ce que** la comparaison de la durée de période détectée de la commutation électrique aux durées de période de commutations électriques précédentes s'effectue en présence d'une vitesse de rotation constante.

5. Procédé selon l'une des revendications précédentes, **caractérisé en ce que** la détection de la fluctuation de la concentricité et la normalisation de la valeur sont effectuées continuellement en permanence.

6. Procédé selon l'une des revendications précédentes, **caractérisé en ce que** la limitation du gradient est variable, la valeur limite du gradient étant dépendante de l'ampleur de la valeur détectée et normalisée.

7. Procédé selon l'une des revendications précédentes, **caractérisé en ce que** la limitation du gradient de variation de la vitesse de rotation s'effectue en fonction de la vitesse de rotation du mécanisme de pompage.

8. Procédé selon l'une des revendications précédentes, **caractérisé en ce que** la valeur normalisée de la fluctuation de la concentricité et/ou la vitesse de rotation du mécanisme de pompage sont transmises à une instance externe.

9. Procédé selon l'une des revendications précédentes, **caractérisé en ce que** la différence entre la vitesse de rotation de consigne prédéfinie par la commutation électrique et la vitesse de rotation effective du mécanisme de pompage est détectée, un signalement ayant lieu sur l'instance externe en cas de dépassement d'une limite pouvant être prédéfinie.

10. Procédé selon l'une des revendications précédentes, **caractérisé en ce qu'**un contrôle automatique du système est déclenché à des intervalles de temps pouvant être prédéfinis, la vitesse de rotation du mécanisme de pompage étant, à cet effet, amené à varier sur un ou plusieurs niveaux différents du niveau réel, la fluctuation de la concentricité du mécanisme de pompage étant respectivement détectée et la valeur de la fluctuation étant normalisée.

11. Procédé selon l'une des revendications précédentes, **caractérisé en ce que** le couple de charge en fonction de la rotation du mécanisme de pompage est détecté et la fluctuation du couple délivré par le moteur électrique est détectée, la fluctuation de la concentricité du mécanisme de pompage en fonction de la vitesse de rotation étant déterminée à partir de la superposition des fluctuations des couples.

12. Procédé selon l'une des revendications précédentes, **caractérisé en ce qu'**en cas de modification de la valeur prédéfinie de la vitesse de rotation du mécanisme de pompage, une limitation, dépendante de la fluctuation de la concentricité détectée et normalisée, du gradient maximal admissible de la variation de la vitesse de rotation est prédéfinie.
